# EUROPÄISCHE PATENTSCHRIFT

(11) **EP 2 364 271 B1**
(45) Veröffentlichungstag und Bekanntmachung des Hinweises auf die Patenterteilung: **28.12.2016**
(21) Anmeldenummer: 09767954.2
(22) Anmeldetag: 27.11.2009
(51) Int. Cl.: C01B 33/027, C01B 33/029, C01B 33/03, B01J 19/24

(54) **VERFAHREN UND VORRICHTUNG ZUR HERSTELLUNG VON REINSTSILZIUM**
METHOD AND DEVICE FOR THE PRODUCTION OF HIGH-PURITY SILICON
PROCÉDÉ ET DISPOSITIF DE FABRICATION DE SILICIUM ULTRA-PUR

(30) Priorität: 27.11.2008 DE 102008059408
(43) Veröffentlichungstag der Anmeldung: 14.09.2011
(73) Patentinhaber: Schmid Silicon Technology GmbH, 72250 Freudenstadt (DE)
(72) Erfinder: PETRIK, Adolf, 72250 Freudenstadt (DE); SCHMID, Christian, 72250 Freudenstadt (DE); HAHN, Jochem, 72108 Rottenburg (DE)
(74) Vertreter: Patentanwaltskanzlei Cartagena
(86) Internationale Anmeldenummer: PCT/EP2009/008457
(87) Internationale Veröffentlichungsnummer: WO 2010/060630

(56) Entgegenhaltungen:
- WO-A2-2006/009456
- DE-A1- 2 814 751
- DE-A1- 2 844 557
- JP-A- 2008 264 638
- US-A- 4 162 291
- US-A- 4 343 772

## Beschreibung

Die vorliegende Erfindung betrifft ein Verfahren zur Herstellung von hochreinem Silizium durch thermische Zersetzung einer Silizium-Verbindung.

Hochreines Silizium wird in der Regel in einem mehrstufigen Prozess ausgehend von metallurgischem Silizium hergestellt. Bei vielen bekannten Verfahren wird dazu metallurgisches Silizium zunächst in eine Silizium-Wasserstoff-Verbindung überführt, die anschließend thermisch zu Silizium und Wasserstoff zersetzt werden kann. Eine entsprechende Reaktionsabfolge ist beispielsweise in der DE 33 11 650 A1 beschrieben.

Die thermische Zersetzung von Silizium-Verbindungen erfolgt dabei üblicherweise entweder an hocherhitzten Partikeln in einer Wirbelschicht oder an hocherhitzten Filamenten in einem Zersetzungs- bzw. Pyrolysereaktor. Die letztere Vorgehensweise ist beispielsweise in der EP 0181803 A1 beschrieben, detaillierte Beschreibungen geeigneter Wirbelschichtreaktoren finden sich beispielsweise in der EP 1 397 620 A1, der EP 1 337 463 A1 oder der EP 1 343 722 A1.

Sowohl die thermische Zersetzung von Silizium-Verbindungen in einer Wirbelschicht als auch die Zersetzung an hoch erhitzten Filamenten weisen einen entscheidenden Nachteil auf, es ist nämlich erforderlich, in regelmäßigen Abständen das abgeschiedene Silizium "abzuernten". Die Reaktoren, in denen die Zersetzung erfolgt, müssen zu diesem Zweck heruntergefahren werden, so dass es möglich ist, die Filamente bzw. die Partikel, an denen die Siliziumabscheidung erfolgt ist, zu entnehmen und zu ersetzen. Dies ist mit großem Aufwand und Kosten verbunden. Zum einen müssen die erforderlichen Ersatzfilamente bzw. die Ersatzpartikel selbst erst in einem aufwendigen Prozess hergestellt werden. Zum anderen sind mit dem regelmäßigem Stoppen und Wiederanfahren der Pyrolysereaktoren erhebliche zeitliche und energetische Verluste verbunden. Darüber hinaus müssen die Reaktoren bei Wiederinbetriebnahme gründlich gespült werden.

Aus der DE 28 14 751 A1 ist es bekannt, zur Herstellung von hochreinem Silizium ein Siliziumhalogenid mit einem Reduktionsmittel wie einem Metall und/oder Wasserstoff in einem Lichtbogen umzusetzen. Dabei entstehen als Reaktionsprodukte elementares Silizium sowie ein Metallchlorid und/oder ein Halogenwasserstoff. Nachteilhaft ist hierbei, dass über das Reduktionsmittel Verunreinigungen eingeschleppt werden können. Zudem sind entstehende Nebenprodukte wie Chlorwasserstoff chemisch sehr aggressiv.

Aus der US 4343772 A ist eine thermische Zersetzung einer Siliziumverbindung zur Gewinnung von elementarem Silizium bekannt. Hierbei wird eine Siliziumverbindung wie Monosilan, Trichlorsilan oder Tribromsilan unmittelbar und unverdünnt in einen hocherhitzten Reaktor eingeblasen, an dessen Wänden sie sich zersetzt.

Aus der US 4162291 A ist ein Verfahren zur Herstellung von flüssigem Silizium durch Umsetzung einer Siliziumverbindung mit einem Reduktionsmittel beschrieben. Sämtliche Reaktanden werden zur Umsetzung in einen Lichtbogen geblasen und dort gemeinsam erhitzt.

Der vorliegend beschriebenen Erfindung lag die Aufgabe zugrunde, eine technische Lösung zur Herstellung von Reinstsilizium bereitzustellen, bei der die obigen Probleme nicht auftreten. Insbesondere soll die Lösung einen weitestgehend kontinuierlichen Betrieb eines Pyrolysereaktors ermöglichen, ohne dass es zu den erwähnten regelmäßigen Unterbrechungen kommt.

Diese Aufgabe wird gelöst durch das Verfahren mit den Merkmalen des Anspruchs 1. Bevorzugte Ausführungsformen des erfindungsgemäßen Verfahrens sind in den abhängigen Ansprüchen 2 bis 11 angegeben. Bei einem erfindungsgemäßen Verfahren zur Herstellung von hochreinem Silizium erfolgt wie bei den eingangs genannten, aus dem Stand der Technik bekannten Verfahren eine thermische Zersetzung einer bevorzugt gasförmigen Silizium-Verbindung.

Gegenüber den bereits bekannten Verfahren zeichnet sich das erfindungsgemäße Verfahren allerdings insbesondere dadurch aus, dass die Silizium-Verbindung zur Zersetzung mit einem Trägergas gemischt wird, das eine Temperatur aufweist, die über der Zersetzungstemperatur der Silizium-Verbindung liegt. Im Gegensatz zu den aus dem Stand der Technik bekannten Verfahren erfolgt die thermische Zersetzung der Silizium-Verbindung somit nicht an der Oberfläche eines erhitzten festen Gegenstands wie z.B. an einem rotglühenden Filament. Stattdessen erfolgt sie vor allem in der Gasphase.

Bevorzugt zeichnet sich das erfindungsgemäße Verfahren dadurch aus, dass die für die Zersetzung der Silizium-Verbindung erforderliche Energie zumindest teilweise, in bevorzugten Ausführungsformen ausschließlich, über das Trägergas bereitgestellt wird.

In besonders bevorzugten Ausführungsformen des erfindungsgemäßen Verfahrens erfolgt die thermische Zersetzung der Silizium-Verbindung unter Bedingungen, bei denen das aus der Zersetzung erhaltene Silizium in flüssiger Form erhalten wird.

Beispielsweise kann dies geschehen, indem die Silizium-Verbindung bei einer Temperatur oberhalb des Schmelzpunkts von Silizium (insbesondere bei einer Temperatur ≥ 1410 °C), besonders bevorzugt bei einer Temperatur zwischen der Schmelztemperatur von Silizium und der Siedetemperatur von Silizium, zersetzt wird.

Bei einer solch hohen Temperatur fällt das aus der Zersetzung resultierende Silizium in der Regel nicht in fester Form an, vielmehr kann es direkt in flüssiger Form erhalten werden. Die so entstehende Schmelze aus hochreinem Silizium kann problemlos kontinuierlich abgeführt werden, wodurch das eingangs erwähnte regelmäßige Stoppen und Wiederanfahren des Reaktors zum "Abernten" von in fester Form abgeschiedenem Silizium vermieden werden kann.

Bei den aus dem Stand der Technik bekannten Verfahren hat man grundsätzlich versucht, die thermische Zersetzung von Silizium-Verbindungen an Filamenten oder Wirbelschichtpartikeln bei möglichst niedrigen Temperaturen durchzuführen, um den erforderlichen Energieaufwand möglichst gering zu halten. Die hohen Temperaturen beim erfindungsgemäßen Verfahren erfordern im Gegensatz dazu zunächst einen höheren energetischen Aufwand. Dieser Mehraufwand wird aber mindestens teilweise dadurch kompensiert, dass das erfindungsgemäße Verfahren kontinuierlich betrieben werden kann. Ein regelmäßiges Stoppen und Wiederhochheizen des Pyrolysereaktors aufgrund des notwendigen Austauschs von Filamenten oder Wirbelschichtpartikeln entfällt. In Kombination mit dem Wegfall der Notwendigkeit, spezielle Filamente und Partikel für die Abscheidung bereitzustellen, bietet das erfindungsgemäße Verfahren erhebliche Vorteile gegenüber dem bekannten Stand der Technik.

In bevorzugten Ausführungsformen wird die thermische Zersetzung der Silizium-Verbindung derart vorgenommen, dass das aus der Zersetzung erhaltene Silizium in flüssiger Form erhalten wird.

Bei Verwendung eines erhitzten Trägergases lässt sich die erwähnte thermische Zersetzung besonders vorteilhaft bewerkstelligen, indem das Trägergas vor dem Vermischen mit der Silizium-Verbindung auf eine Temperatur oberhalb des Schmelzpunkts von Silizium erhitzt wird (insbesondere auf eine Temperatur ≥ 1410 °C) besonders bevorzugt auf eine Temperatur zwischen der Schmelztemperatur von Silizium und der Siedetemperatur von Silizium.

Vorzugsweise wird das Trägergas vor dem Zumischen der Silizium-Verbindung auf eine Temperatur zwischen 1410 °C und 5000 °C, bevorzugt zwischen 1650 °C und 5000 °C, besonders bevorzugt auf eine Temperatur zwischen 2.000 °C und 4.000 °C, insbesondere auf eine Temperatur zwischen 2.000 °C und 3.000 °C, erhitzt.

Bei der verwendeten Silizium-Verbindung handelt es sich bevorzugt um eine Silizium-Wasserstoff-Verbindung, besonders bevorzugt um Monosilan (SiH₄). Allerdings ist beispielsweise auch die Zersetzung von Chlorsilanen wie z.B. insbesondere Trichlorsilan (SiHCl₃) gemäß dem erfindungsgemäßen Verfahren durchführbar. Auch der Einsatz von bei Raumtemperatur flüssigen Silanen ist grundsätzlich denkbar, diese müssen gegebenenfalls vor dem Vermischen mit dem Trägergas verdampft werden.

Unter hochreinem Silizium soll im Rahmen der vorliegenden Anmeldung im Übrigen insbesondere Silizium verstanden werden, das unmittelbar in der Halbleiterindustrie, beispielsweise zur Herstellung von Solarzellen oder Mikrochips, weiterverarbeitet werden kann.

Bei dem Trägergas handelt es sich im Übrigen bevorzugt um Wasserstoff. Dies gilt natürlich insbesondere dann, wenn es sich bei der Silizium-Verbindung um eine Silizium-Wasserstoff-Verbindung handelt. In weiteren bevorzugten Ausführungsformen kann es bei dem Trägergas auch um eine Trägergasmischung aus Wasserstoff und einem Edelgas, insbesondere Argon, handeln. Das Edelgas ist in der Trägergasmischung bevorzugt in einem Anteil zwischen 1 % und 50 % enthalten.

Ein Eintrag einer entsprechenden Energiemenge in das Trägergas kann insbesondere mittels eines Plasmagenerators erfolgen. Bevorzugt wird die Silizium-Verbindung also mit einem Plasma als Trägergas gemischt, besonders bevorzugt mit einem Wasserstoff-Plasma.

Bei einem Plasma handelt es sich bekanntlich um eine teilweise ionisiertes Gas, das zu einem nennenswerten Anteil freie Ladungsträger wie Ionen oder Elektronen enthält. Erhalten wird ein Plasma stets durch äußere Energiezufuhr, welche insbesondere durch thermische Anregung, durch Strahlungsanregung oder durch Anregungen durch elektrostatische oder elektromagnetische Felder erfolgen kann. Vorliegend ist insbesondere die letztere Anregungsmethode bevorzugt. Entsprechende Plasmageneratoren sind kommerziell erhältlich und müssen im Rahmen der vorliegenden Anmeldung nicht näher erläutert werden.

In der Regel übersteigt die Temperatur der Mischung aus Trägergas und Silizium-Verbindung nicht die Siedetemperatur von Silizium (3280 °C), ein Bereich zwischen 1410 °C und 3280 °C ist entsprechend bevorzugt. Innerhalb dieses Bereichs sind insbesondere Temperaturen zwischen 1.410 °C und 2.000 °C bevorzugt. Besonders bevorzugt wird die zu zersetzende Silizium-Verbindung mit dem erhitzten Trägergas derart gemischt, dass die resultierende Mischung eine Temperatur zwischen 1.600 °C und 1.800 °C aufweist. Entscheidend ist hierfür insbesondere die Temperatur des Trägergases sowie weiterhin das Mischungsverhältnis zwischen dem Trägergas und der Silizium-Verbindung.

Bevorzugte Bereiche für die Trägergastemperatur wurden bereits genannt. Der Anteil an der Silizium-Verbindung in der Mischung liegt besonders bevorzugt zwischen 5 Gew.-% und 99 Gew.-%, insbesondere zwischen 5 Gew.-% und 50 Gew.-%, besonders bevorzugt zwischen 5 Gew.-% und 20 Gew.-%.

Bevorzugt wird die Mischung der Silizium-Verbindung mit dem Trägergas, insbesondere unmittelbar nach dem Mischen, in einen Reaktor geleitet. Dabei erfolgt die thermische Zersetzung der Silizium-Verbindung nicht erst im Reaktor, sie setzt vielmehr in der Regel schon vorher ein. Bei Verwendung eines erhitzten Trägergases setzt die Zersetzung z.B. in der Regel bereits schon beim Mischvorgang ein. Im Reaktor kann die Zersetzung abgeschlossen werden und insbesondere kann dort auch eine mindestens teilweise Auftrennung der Mischung erfolgen. Nach Beginn der Zersetzung umfasst die Mischung ja nicht mehr nur die Silizium-Verbindung und das Trägergas sondern auch Siliziumdämpfe und ggf. gasförmige Zerfallsprodukte. Siliziumdämpfe können an den Reaktorwänden kondensieren. Kondensierte Siliziumdämpfe können sich wiederum am Reaktorboden sammeln. Das sich am Reaktorboden sammelnde flüssige Silizium wird vorzugsweise im Chargenbetrieb (batch process) oder kontinuierlich oder zumindest quasikontinuierlich aus dem Reaktor abgelassen. Das flüssige Silizium kann anschließend portioniert und in eine zur Weiterverarbeitung geeignete Form überführt werden, beispielsweise durch Guss.

Die Einleitung der Mischung in den Reaktor erfolgt vorzugsweise bei relativ hohen Strömungsgeschwindigkeiten, um eine gute Verwirbelung innerhalb des Reaktors zu erreichen. Auf den Aspekt der Verwirbelung wird unten noch detaillierter eingegangen. Besonders bevorzugt sind Geschwindigkeiten zwischen 200 m/s und 800 m/s, insbesondere zwischen 200 m/s und 400 m/s. Der Begriff "Einleiten" wird diesen Geschwindigkeiten streng genommen nicht mehr gerecht, man kann bei diesen Geschwindigkeiten besser von einem "Einspritzen" unter hohem Druck sprechen. Bevorzugt wird die Mischung kontinuierlich oder zumindest quasikontinuierlich in den Reaktor eingeleitet.

Alternativ kann die Mischung auch erst im Reaktor gebildet werden. In diesem Fall werden die Silizium-Verbindung und das hocherhitzte Trägergas separat in den Reaktor eingeleitet und erst beim oder nach dem Eintreten in den Innenraum des Reaktor vermischt, so dass die Zersetzung erst im Reaktor einsetzt.

In jedem Fall ist es bevorzugt, dass der bei der Zersetzung anfallende Siliziumdampf im Reaktor kondensiert und in flüssiger Form aus dem Reaktor abgeführt wird. Die vorliegende Erfindung betrifft also insbesondere auch ein Verfahren zur Herstellung von hochreinem Silizium durch thermische Zersetzung einer Silizium-Verbindung, das sich besonders dadurch auszeichnet, dass die Silizium-Verbindung zur Zersetzung mit einem Trägergas vermischt wird, das eine Temperatur aufweist, bei der die Silizium-Verbindung thermisch zersetzt wird und dass das dabei entstehende Silizium in einem Reaktor kondensiert und in flüssiger Form aus dem Reaktor abgeführt wird.

Im Reaktor herrscht bevorzugt ein Druck leicht oberhalb Normaldruck, insbesondere zwischen 1013,25 mbar und 2000 mbar.

Bei dem Reaktor handelt es sich bevorzugt um einen geschlossenen Reaktor, ein Stoffaustausch kann so im Wesentlichen nur über die unten beschriebene Ableitung für gasförmige Zersetzungsprodukte, den Ablauf für flüssiges Silizium oder den oder die Einlasskanäle für das Trägergas und die Silizium-Verbindung oder die Mischung daraus erfolgen.

Wenn als Silizium-Verbindung eine Silizium-Wasserstoff-Verbindung eingesetzt wird, so wird bei der Zersetzung der Silizium-Verbindung neben dem bereits erwähnten flüssigen Silizium natürlich noch gasförmiger Wasserstoff erhalten. In einer bevorzugten Ausführungsform des erfindungsgemäßen Verfahrens wird der erhaltene Wasserstoff nicht verworfen, sondern vielmehr als Trägergas wiederverwendet. Der bei der Zersetzung erhaltene Wasserstoff kann entsprechend in den Plasmagenerator zurückgeleitet, in ein Hochtemperaturplasma überführt und wieder mit Silizium-Verbindung vermischt werden.

Auch wenn die Zersetzung der Silizium-Verbindung alternativ, also ohne Verwendung eines erhitzten Trägergases, beispielsweise durch Durchleiten der Silizium-Verbindung durch einen entsprechend erhitzten Hohlkörper (s.o.), erfolgt, findet ein solcher Reaktor üblicherweise Verwendung. Er dient dann insbesondere zur Kondensation des Siliziums sowie zur Abtrennung des entstandenen Wasserstoffs, der in einem vorgeschalteten Prozessschritt zur Herstellung der Silizium-Verbindung weiterverwertet werden kann.

Ein zur Durchführung des erfindungsgemäßen Verfahrens geeigneter Reaktor umfasst einen hitzebeständigen Innenraum, in den eine Mischung der oben erwähnten Silizium-Verbindung mit einem auf eine der oben beschriebenen Temperaturen erhitzten Trägergas, wie es oben beschrieben wurde, eingeleitet werden kann. Der Reaktor muss dazu mit entsprechenden temperaturbeständigen Materialien ausgekleidet sein. Geeignet sind hier beispielsweise Auskleidungen auf Basis von Graphit. Außerdem ist es wichtig, dass das erhaltene Silizium innerhalb des Reaktors nicht erstarrt. Die Wände des Reaktorinnenraums weisen im Betrieb bevorzugt eine Temperatur oberhalb des Schmelzpunkts von Silizium auf, damit sich keine festen Siliziumablagerungen bilden können. Der Reaktor sollte entsprechend eine geeignete Isolierung aufweisen, um übermäßige Wärmeverluste zu vermeiden. Gegebenenfalls kann der Reaktor auch mit einer oder mehreren Heizeinrichtungen versehen sein, mit denen die Bestandteile, die Wände und/oder der Innenraum des Reaktors auf Temperaturen oberhalb des Schmelzpunkts von Silizium erhitzt werden können. Bei Verwendung eines Trägergases erfolgt eine Beheizung des Reaktors jedoch bevorzugt ausschließlich über das Trägergas, was ja bereits erwähnt wurde.

Neben dem hochtemperaturbeständigen Innenraum umfasst der Reaktor insbesondere noch eine Ableitung für gasförmige Zersetzungsprodukte (in bevorzugten Ausführungsformen insbesondere reiner Wasserstoff) sowie einen Ablauf für das bereits erwähnte flüssige Silizium. Auf beide wird noch gesondert eingegangen.

Mindestens ein Abschnitt des Reaktorinnenraums ist in bevorzugten Ausführungsformen im Wesentlichen zylindrisch ausgebildet. Die Einleitung der Mischung aus der Silizium-Verbindung und dem Trägergas kann über einen in den Innenraum mündenden Kanal erfolgen. Der Mündung dieses Kanals ist insbesondere im oberen Bereich des Innenraums angeordnet, besonders bevorzugt am oberen Ende des im wesentlichen zylindrischen Abschnitts, während sich der Ablauf für das flüssige Silizium vorzugsweise im Bodenbereich des Reaktorinnenraums befindet. Der Boden des Reaktorinnenraums kann konisch ausgebildet sein mit dem Ablauf am tiefsten Punkt, um das Abführen des flüssigen Siliziums zu erleichtern.

In besonders bevorzugten Ausführungsformen mündet der Kanal in den Reaktorinnenraum tangential ein, insbesondere am oberen Ende des im Wesentlichen zylindrischen Abschnitts. Wird die Mischung aus der Silizium-Verbindung und dem Trägergas bei hohen Strömungsgeschwindigkeiten (wie oben angegeben) durch einen solchen tangential in den Innenraum einmündenden Kanal eingeleitet, so wird die Mischung wegen der tangentialen Mündung des Kanals in starke Rotation versetzt. Es resultiert eine kreisende Wirbelbewegung innerhalb des Reaktors, durch die es zu einer effizienten Durchmischung des Plasmas, der Silizium-Verbindung und von gebildeten Siliziumdämpfen kommt.

Innerhalb des Reaktors spielt insbesondere die Frage des Übergangs der gebildeten Silizium-Dämpfe in die flüssige Phase eine große Rolle. Die schnelle Kondensation der Siliziumdämpfe kann insbesondere durch die angesprochene Verwirbelung gefördert werden, daneben ist aber natürlich auch die Temperatur der Reaktorinnenwände, an denen das Silizium primär kondensiert, ein wichtiger Faktor. Vorzugsweise wird die Temperatur der Wände des Reaktors auf einem relativ niedrigen Niveau (bevorzugt zwischen 1420 °C und 1800 °C, insbesondere zwischen 1500 °C und 1600 °C) gehalten. Dazu kann der Reaktor Kühlmittel aufweisen, beispielsweise einen Wassermantel, über die die Temperatur der Reaktorinnenwand reguliert werden kann.

Die Ableitung für die gasförmigen Zersetzungsprodukte umfasst in bevorzugten Ausführungsformen einen Filter in Form eines einseitig offenen Rohrs. Dieses ist im Innenraum des Reaktors insbesondere in senkrechter Stellung angeordnet, wobei sich die offene Seite des Rohrs bevorzugt im Bereich des Reaktorbodens befindet. Dort kann entstandener Wasserstoff in das Rohr eintreten und abgeführt werden. Gegebenenfalls mitgeschleppte Siliziumdämpfe können sich auf der Innenseite des Rohrs abscheiden und sich in Richtung Reaktorboden bewegen (Gegenstromprinzip). In dem Rohr erfolgt so eine weitere Abtrennung von mitgeschleppten Siliziumdämpfen aus dem Wasserstoff. Das Rohr wird vorzugsweise auf einer Temperatur zwischen 1600°C und 1800°C gehalten.

Eine Anlage zur Herstellung von hochreinem Silizium umfasst in erster Linie einen Reaktor zur Herstellung von hochreinem Silizium, wie er oben beschrieben ist. Daneben weist die Anlage insbesondere noch eine Heizvorrichtung auf, in der das Trägergas auf die oben genannten Temperaturen erhitzt werden kann. Besonders bevorzugt handelt es sich bei der Heizvorrichtung, wie bereits erwähnt, um einen Plasmagenerator.

Weitere Merkmale der Erfindung ergeben sich aus der nachfolgenden Beschreibung einer bevorzugten Ausführungsform einer Anlage zur Herstellung von Reinstsilizium in Verbindung mit den Unteransprüchen. Hierbei können einzelne Merkmale jeweils für sich oder zu mehreren in Kombination miteinander bei einer Ausführungsform der Erfindung verwirklicht sein. Die beschriebenen bevorzugten Ausführungsformen dienen lediglich zur Erläuterung und zum besseren Verständnis der Erfindung und sind in keiner Weise einschränkend zu verstehen.

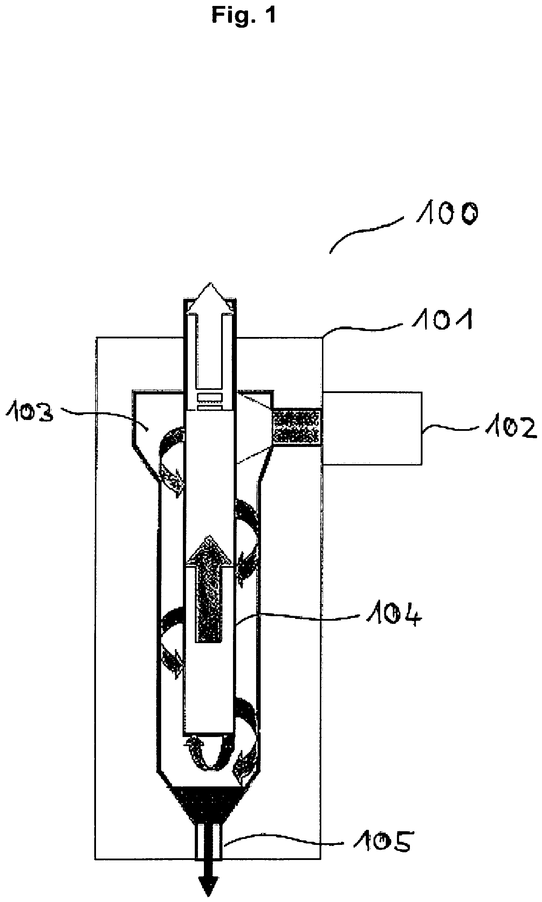

Fig. 1 zeigt die schematische Darstellung einer bevorzugten Ausführungsform einer Anlage zur Herstellung von Reinstsilizium.

Grob lässt sich eine solche Anlage 100 in den Reaktor 101 und die Heizvorrichtung 102 unterteilen. Bei letzterer handelt es sich insbesondere um ein Plasmagenerator. In dem Plasmagenerator wird Wasserstoff auf eine Temperatur zwischen 2.000 °C und 3.000 °C erhitzt. Anschließend wird zu dem entstandenen Plasma das zu zersetzende Monosilan gemischt. Die entstehende Mischung wird bei hohen Strömungsgeschwindigkeiten über einen tangential in den über weite Bereiche zylindrisch ausgestalteten Innenraum 103 des Reaktors 101 mündenden Kanal eingespritzt. Innerhalb des Innenraumes ist zentral in senkrechter Stellung ein rohrförmiger Filter 104 angeordnet. Die eingespritzte Mischung kann um diesen Filter herum an den Innenwänden des Reaktors 101 entlang wirbeln, wobei es zur Abscheidung von flüssigem Silizium kommt. Das Trägergas sowie entstandenes Wasserstoffgas kann anschließend in den Filter 104 eintreten, in dem es zu einer weiteren Abscheidung von flüssigem Silizium kommen kann. Dieses kann sich im unteren Bereich des Reaktorinnenraums 103 sammeln. Die Strömungsrichtung der Mischung bzw. des Trägergases und des Wasserstoffgases ist schematisch durch Pfeile angezeigt.

Im Bodenbereich ist der Innenraum des Reaktors 101 konisch ausgebildet. An seinem tiefsten Punkt befindet sich der Auslass 105 für entstandenes flüssiges Silizium.

## Patentansprüche

1. Verfahren zur Herstellung von hochreinem Silizium durch thermische Zersetzung einer Silizium-Verbindung, **dadurch gekennzeichnet, dass** die Silizium-Verbindung zur Zersetzung mit einem Trägergas vermischt wird, das eine Temperatur aufweist, bei der die Silizium-Verbindung thermisch zersetzt wird.

2. Verfahren nach Anspruch 1, **dadurch gekennzeichnet, dass** die für die Zersetzung der Silizium-Verbindung erforderliche Energie zumindest teilweise, in bevorzugten Ausführungsformen ausschließlich, über das Trägergas bereitgestellt wird.

3. Verfahren nach einem der Ansprüche 1 oder 2, **dadurch gekennzeichnet, dass** das Trägergas vor dem Mischen mit der Silizium-Verbindung auf eine Temperatur zwischen 1410 °C und 4000°C, insbesondere zwischen 2000 °C und 4000 °C, erhitzt wird.

4. Verfahren nach einem der vorhergehenden Ansprüche, **dadurch gekennzeichnet, dass** es sich bei der Silizium-Verbindung um eine Silizium-Wasserstoff-Verbindung handelt.

5. Verfahren nach einem der vorhergehenden Ansprüche, **dadurch gekennzeichnet, dass** es sich bei dem Trägergas um Wasserstoff handelt.

6. Verfahren nach einem der vorhergehenden Ansprüche, **dadurch gekennzeichnet, dass** das Trägergas vor dem Vermischen mit der Silizium-Verbindung in einem Plasmagenerator erhitzt wird.

7. Verfahren nach einem der vorhergehenden Ansprüche, **dadurch gekennzeichnet, dass** die Mischung aus der Silizium-Verbindung und dem Trägergas auf eine Temperatur zwischen 1600 °C und 1800 °C eingestellt wird.

8. Verfahren nach einem der vorhergehenden Ansprüche, **dadurch gekennzeichnet, dass** der Anteil an der Silizium-Verbindung in der Mischung zwischen 5 Gew.-% und 99 Gew.-% liegt.

9. Verfahren nach einem der vorhergehenden Ansprüche, **dadurch gekennzeichnet, dass** die Mischung der Silizium-Verbindung mit dem Trägergas in einen Reaktor eingeleitet wird.

10. Verfahren nach Anspruch 9, **dadurch gekennzeichnet, dass** die Mischung mit einer Strömungsgeschwindigkeit zwischen 200 m/sec und 400 m/sec in den Reaktor eingeleitet wird.

11. Verfahren nach einem der vorhergehenden Ansprüche, **dadurch gekennzeichnet, dass** bei der thermischen Zersetzung der Silizium-Wasserstoff-Verbindung entstandener Wasserstoff als Trägergas wiederverwendet wird.

## Claims

1. Process for preparing high-purity silicon by thermal decomposition of a silicon compound, **characterized in that** the silicon compound is decomposed by mixing it with a carrier gas which is at a temperature at which the silicon compound is thermally decomposed.

2. Process according to Claim 1, **characterized in that** the energy required for the decomposition of the silicon compound is at least partly, in preferred embodiments exclusively, provided via the carrier gas.

3. Process according to either of claims 1 and 2, **characterized in that** the carrier gas, before being mixed with the silicon compound, is heated to a temperature between 1410°C and 4000°C, especially between 2000°C and 4000°C.

4. Process according to any of the preceding claims, **characterized in that** the silicon compound is a silicon-hydrogen compound.

5. Process according to any of the preceding claims, **characterized in that** the carrier gas is hydrogen.

6. Process according to any of the preceding claims, **characterized in that** the carrier gas, before being mixed with the silicon compound, is heated in a plasma generator.

7. Process according to any of the preceding claims, **characterized in that** the mixture of the silicon compound and the carrier gas is adjusted to a temperature between 1600°C and 1800°C.

8. Process according to any of the preceding claims, **characterized in that** the proportion of the silicon compound in the mixture is between 5% by weight and 99% by weight.

9. Process according to any of the preceding claims, **characterized in that** the mixture of the silicon compound with the carrier gas is introduced into a reactor.

10. Process according to Claim 9, **characterized in that** the mixture is introduced into the reactor with a flow rate between 200 m/sec and 400 m/sec.

11. Process according to any of the preceding claims, **characterized in that** hydrogen formed in the thermal decomposition of the silicon-hydrogen compound is reused as carrier gas.

## Revendications

1. Procédé pour la préparation de silicium de haute pureté par décomposition thermique d'un composé silicié, **caractérisé en ce que** le composé silicié est mélangé, pour la décomposition, avec un gaz support qui présente une température à laquelle le composé silicié se décompose thermiquement.

2. Procédé selon la revendication 1, **caractérisé en ce que** l'énergie nécessaire pour la décomposition du composé silicié est mise à disposition au moins partiellement, dans des modes de réalisation préférés exclusivement, via le gaz support.

3. Procédé selon l'une quelconque des revendications 1 ou 2, **caractérisé en ce que** le gaz support est chauffé, avant le mélange avec le composé silicié, à une température entre 1410°C et 4000°C, en particulier entre 2000°C et 4000°C.

4. Procédé selon l'une quelconque des revendications précédentes, **caractérisé en ce qu'**il s'agit, pour le composé silicié, d'un composé de silicium-hydrogène.

5. Procédé selon l'une quelconque des revendications précédentes, **caractérisé en ce qu'**il s'agit, pour le gaz support, d'hydrogène.

6. Procédé selon l'une quelconque des revendications précédentes, **caractérisé en ce que** le gaz support est chauffé, avant le mélange avec le composé silicié, dans un générateur de plasma.

7. Procédé selon l'une quelconque des revendications précédentes, **caractérisé en ce que** le mélange du composé silicié et du gaz support est réglé à une température entre 1600°C et 1800°C.

8. Procédé selon l'une quelconque des revendications précédentes, **caractérisé en ce que** la proportion de composé silicié dans le mélange se situe entre 5% en poids et 99% en poids.

9. Procédé selon l'une quelconque des revendications précédentes, **caractérisé en ce que** le mélange du composé silicié et du gaz support est introduit dans un réacteur.

10. Procédé selon la revendication 9, **caractérisé en ce que** le mélange est introduit dans le réacteur à une vitesse d'écoulement entre 200 m/s et 400 m/s.

11. Procédé selon l'une quelconque des revendications précédentes, **caractérisé en ce que** l'hydrogène formé lors de la décomposition thermique du composé de silicium-hydrogène est réutilisé comme gaz support.
